(19) Europäisches Patentamt
European Patent Office
Office européen des brevets

(11) EP 0 500 435 B1

(12) FASCICULE DE BREVET EUROPEEN

(45) Date de publication et mention de la délivrance du brevet:
**17.04.1996 Bulletin 1996/16**

(51) Int Cl.$^6$: **C09K 5/00**

(21) Numéro de dépôt: **92400407.0**

(22) Date de dépôt: **14.02.1992**

# (54) Utilisation d'isomères de mono et bis(méthylbenzyle)xylène comme fluide de transfert thermique

Verwendung von Isomeren von Mono- und bis(methylbenzyle)xylen als Wärmeübertragungflüssigkeit

Use of isomers of mono- and bis(methylbenzyle)xylene as heat-transfer fluid

(84) Etats contractants désignés:
**AT BE CH DE DK ES FR GB GR IT LI LU NL PT SE**

(30) Priorité: **22.02.1991 FR 9102172**

(43) Date de publication de la demande:
**26.08.1992 Bulletin 1992/35**

(73) Titulaire: **ELF ATOCHEM S.A.**
**F-92800 Puteaux (FR)**

(72) Inventeurs:
- **Commandeur, Raymond**
  **F-38220 Vizille (FR)**
- **Sarron, Jean-Pierre**
  **F-78000 Chatou (FR)**

(56) Documents cités:
**DE-A- 1 419 604** **DE-A- 2 233 705**

- **Derwent File Supplier WPI Accession number 77-87263y (49) Derwent Publications, London, UK.**
- **Derwent File Supplier WPI Accession number 74-20301v (11) DerwentPublications, London UK**
- **Derwent File Supplier WPI Accession Number 75-24897w (15) Derwent Publications, London, UK.**
- **Derwent File Supplier JAPS Derwent Publications, London, UK. & JP- A-55040726**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

EP 0 500 435 B1

Printed by Jouve, 75001 PARIS (FR)

## Description

La présente invention concerne l'utilisation d'isomères de mono et bis(méthylbenzyl)xylène comme fluide de transfert thermique. Le principe des échanges thermiques avec des fluides autres que l'eau est décrit dans le KIRK-OTHMER Encyclopedia of Chemical technology - 3e édition Vol 12, pages 171-190. Il s'agit d'utiliser des huiles minérales ou de synthèse ayant un point d'ébullition, à la pression atmosphérique, entre 200 et 400°C. On peut effectuer des transferts thermiques à pression atmosphérique ou de quelques bars au lieu des très fortes pressions de la vapeur d'eau à la même température.

Dans le brevet US 3475115 on décrit l'utilisation de dibenzyltoluène et bis(méthylbenzyl)toluène comme fluide caloporteur. Cependant le bis(méthylbenzyl) toluène est solide à - 17° et sa viscosité à 20°C est 204 centistokes. Quant au dibenzyltoluène le point d'écoulement est de -34°C et la viscosité à 20°C est 35 centistokes.

On a maintenant trouvé qu'on pouvait utiliser comme fluide thermique du (méthylbenzyl)xylène ou un mélange de mono et bis(méthylbenzyl)xylène.

Ce fluide thermique reste liquide à très basse température et est très stable à haute température.

L'invention est donc l'utilisation comme fluide de transfert thermique de (méthylbenzyl)xylène ou d'un mélange de produits de formule (A)

(A)

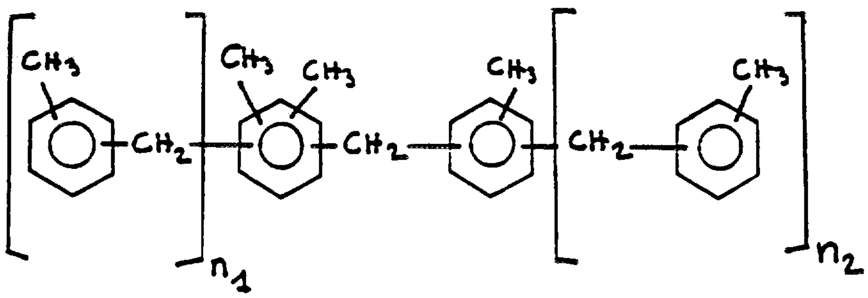

dans laquelle $n_1$ et $n_2$ = 0 ou 1 et qui contient des produits (A) tel que $n_1 + n_2 = 1$.

Le fluide de transfert contient donc du produit A à 2 noyaux, le (méthylbenzyl) xylène, et du produit A à 3 noyaux qu'on appelle bis(méthylbenzyl)xylène. Ce produit A à 3 noyaux peut être du produit tel que $n_1 = 1$ et $n_2 = 0$, du produit tel que $n_1 = 0$ et $n_2 = 1$ ou un mélange de ces deux derniers. On ne sortirait pas du cadre de l'invention si le fluide thermique contenait aussi des produits tels que $n_1 = 1$ et $n_2 = 1$.

Les proportions de produits à 2 et 3 noyaux dans le fluide thermique peuvent varier dans de larges limites. Dans les applications à basse température il est avantageux que le rapport $\frac{\text{produit à 2 noyaux}}{\text{produit à 3 noyaux}}$ (en poids) soit compris entre $\frac{65}{35}$ et $\frac{90}{10}$. Si on veut maintenir le fluide à températarature inférieure à - 50°C au repos sans qu'il apparaisse de cristaux ou de début de phase solide il est préférable de choisir le rapport précédent entre $\frac{82}{18}$ et $\frac{87}{13}$. On ne sortirait pas du cadre de l'invention en remplaçant en tout ou partie le produit (A) à 3 noyaux par le produit (B) de formule :

(B)

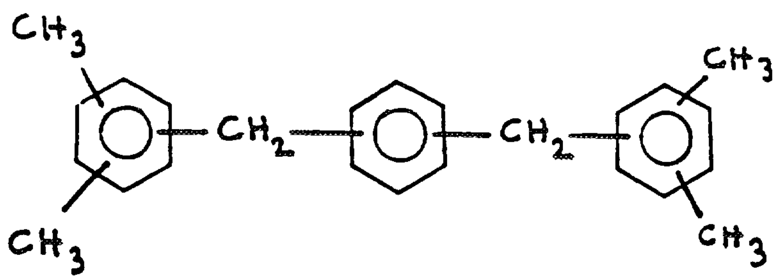

Le produit A peut être préparé par condensation de chlorure (méthylbenzyl) avec du xylène en présence d'un catalyseur de Friedel et Crafts. On obtient un mélange de produits à 2 et 3 noyaux. On peut aussi obtenir des produits plus lourds, il suffit d'une simple distillation pour isoler les produits à 2 et à 3 noyaux et ajuster leur proportion respective.

Le produit B peut être préparé par condensation du dichlorure de xylyle $CH_2Cl\text{-}C_6H_4\text{-}CH_2Cl$ sur le xylène en présence d'un catalyseur de Friedel et Crafts.

Le produit B peut être séparé par distillation au cas où on a produit simultanément des lourds.

On peut aussi préparer directement un mélange de A et B en effectuant une chloration radicalaire du xylène, pour produire du chlorure de (méthylbenzyle) $CH_3\text{-}C_6H_4\text{-}CH_2Cl$ et du dichlorure de xylyle $CH_2Cl\text{-}C_6H_4\text{-}CH_2Cl$ en mélange avec du xylène c'est-à-dire qu'on a effectué une chloration partielle puis on ajoute un catalyseur de Friedel et Crafts.

On peut éventuellement distiller pour obtenir un mélange de produit A à 2 et 3 noyaux et de produit B. Ce procédé est décrit dans le brevet EP 299867 dont le contenu est incorporé dans la présente demande.

Selon ce procédé, chloration suivie d'une condensation de Friedel et Crafts, on obtient directement un mélange contenant :

65 à 90 parties de A tel que $n_1 + n_2 = 0$
35 à 10 parties du mélange de A tel que $n_1 + n_2 = 1$ et de produit B. La proportion de $A/n_1 + n_2 = 1$ et B étant environ 3 parties de $A/n_1 + n_2 = 1$ pour une partie de B

c'est-à-dire que le mélange comprend :
[2 noyaux] 65 à 90 parties de A tel que $n_1 + n_2 = 0$

$$[3\ \text{noyaux}] \begin{cases} 35 \times \frac{3}{4} \text{ à } 10 \times \frac{3}{4} \text{ parties de A tel que } n_1 + n_2 = 1 \\ 35 \times \frac{1}{4} \text{ à } 10 \times \frac{1}{4} \text{ parties de B} \end{cases}$$

Les produits de l'invention présentent un bon compromis concernant les caractéristiques physiques :

. Point d'ébullition supérieur à 310°C
. Viscosité faible à température ambiante (environ 20 $mm2/s^{-1}$ 20°C)
. Point de congélation < à - 30°C (pour les produits à base d'orthoxylène, ou produits à partir du mélange d'isomères ortho avec méta ou para car le produit avec paraxylène seul cristallise vers 0°C.

Si on compare les produits de l'invention avec les alkylats habituels du benzène :

- les alkylats lourds (10 % d'hydrogènes aromatiques pour 90 % d'hydrogènes aliphatiques) ont un point d'ébullition de 330°C mais une viscosité de 100 $mm2/s^{-1}$ à 20°C
- les alkylats plus légers (16 % d'hydrogènes aromatiques pour 84 % d'hydrogènes aliphatiques ont une viscosité de 15 $mm2/s^{-1}$ à 20°C mais un point d'ébullition de seulement 270°C.

Les produits de l'invention ont une stabilité thermique nettement meilleure que les alkylats habituels du benzène et une faible aptitude à conduire à la formation de benzène.

## EXEMPLE 1

Dans un réacteur muni d'une agitation, d'un condenseur, d'un tube d'alimentation de chlore et d'une lampe PHILIPS TLADK de 30 Watt, on place 424 g d'orthoxylène (4 moles) ; on introduit ensuite 71 g de chlore gazeux (1 mole) en maintenant la température à 80°C durant 1 heure.

Après arrêt de l'initiation photochimique, le milieu réactionnel est placé dans une ampoule de coulage et il est introduit en 1 heure dans un réacteur muni d'une agitation contenant 2 moles d'orthoxylène et 60 mg de $FeCl_3$, à une température de 100°C. L'ensemble est maintenu encore 1 heure à 100°C sous agitation après fin de coulage. L'excès d'orthoxylène est éliminé par distillation sous vide de 10 mm de mercure avec une colonne de quelques plateaux de manière à ce que la teneur résiduelle en orthoxylène dans le produit en pied soit inférieure à 500 ppm (température de pied en fin de distillation = 190°C).

Le rendement pondéral calculé d'après l'orthoxylène consommé est de 97 %.

Le mélange est soumis à une distillation avec quelques plateaux sous 0,5 mm de mercure. Nous obtenons :

1°) une fraction d'un liquide incolore distillant à la température de 120°-140°C constituée par le produit $A/n_1 + n_2 = 0$. Cette fraction est nommée XX01.
2°) une fraction d'un liquide jaune clair visqueux distillant à la température de 195-215°C cristallisant lentement à température ambiante. La composition en poids est la suivante :

75 % de produit $A/n_1 + n_2 = 1$ di(méthylbenzyl)xylène
25 % de produit B. Cette fraction est nommée XX02.

On mélange les fractions précédentes pour faire une composition contenant :

85 parties de $A/n_1 + n_2 = 0$
15 parties de la 2e fraction

c'est-à-dire :

85 parties de $A/n_1 + n_2 = 0$
15 x 0,75 = 11,25 parties de $A/n_1 + n_2 = 1$
15 x 0,25 = 3,75 parties de B

Au bout de quelques mois à - 50°C il apparaît un début de cristallisation.

On effectue les mêmes essais mais avec des produits préparés comme dans l'exemple 1 sauf qu'on utilise un mélange de 75 % d'orthoxylène et 25 % de paraxylène au lieu de 100 % d'orthoxylène.

Aucun des échantillons ne présente de début de cristallisation même après plusieurs mois à - 50°C.

## EXEMPLE 2

Dans un réacteur en verre de 1 litre muni d'une agitation rotative, d'un réfrigérant ascendant, d'une gaine thermométrique, d'un injecteur d'azote on place 320 g d'un mélange d'oligomères obtenu dans l'exemple 1 ayant la composition suivante :

XX01 = 85 %
XX02 = 15 %
viscosité cinématique = 21,6 $mm2/s^{-1}$ (à 20°C)

L'atmosphère au-dessus du liquide est balayé par un courant d'azote par l'intermédiaire de l'introducteur. L'introduction d'azote est ensuite coupée et la sortie du réfrigérant est reliée à une cuve à eau. Le produit est chauffé progressivement jusqu'à la température de 313°C avec agitation. Le produit est ensuite maintenu pendant 118 heures à 313°C avec agitation. Le dégagement gazeux dans la cuve à eau est de 200 cm3 (l'analyse infra-rouge des gaz montre une présence de méthane).

Le réacteur est refroidi et les parties hautes ainsi que le réfrigérant sont rincés par le produit restant dans le fond du réacteur et l'ensemble est analysé par chromatographie en phase gazeuse.

| | départ | produit après 118 h à 313°C |
|---|---|---|
| benzène | 1 ppm | 2 ppm |
| toluène | 20 ppm | 20 ppm |
| orthoxylène | 70 ppm | 190 ppm |

Il n'y a pas de détection d'autres produits légers.

## EXEMPLE 3

Dans un appareillage et des conditions opératoires identiques à celles de l'exemple 2, on maintient 118 h à 313°C un alkylat lourd du benzène utilisé habituellement comme fluide thermique dans la zone de température de -10°C à +310°C. L'analyse RMN sur ce produit met en évidence une répartition de 90 % en hydrogènes aliphatiques pour 10 % d'hydrogènes aromatiques, la chaîne aliphatique étant ramifiée. La viscosité cinématique à 20°C est de 103 $mm2/s^{-1}$.

En fin d'essai la quantité de gaz dégagée dans la cuve à eau est de 1 250 cm3 (mélange d'alcanes et d'alcènes d'après l'analyse infra-rouge).

L'analyse chromatographique du liquide dans le réacteur après rinçage des parties hautes et du réfrigérant comme dans l'exemple 2 conduit aux résultats suivants :

| | Départ | Produit après 118 h à 313°C |
|---|---|---|
| benzène | < 2 ppm | < 80 ppm |
| toluène | < 3 ppm | < 50 ppm |
| Total des produits légers | < 1 000 ppm | 8 000 ppm |

Les produits légers correspondent à des produits ayant un point d'ébullition se situant entre 40 et 130°C. Le nombre

de ces produits est très élevé (plusieurs dizaines) ce qui rend le chromatrogramme très complexe et ne permet pas de conclure sur la présence ou non du benzène. Nous constatons la présence d'un pic au niveau du temps de rétention du benzène.

**EXEMPLE 4 :**

Dans le même appareillage que celui de l'exemple 1 nous traitons pendant 20 h à 370°C, 180 g de produit correspondant au XX02 de l'exemple 1.

L'analyse chromatographique sur le produit après rinçage de l'appareillage comme dans l'exemple 2 conduit aux résultats suivants :

| | XX02 départ | XX02 après traitement thermique |
|---|---|---|
| teneur en benzène | < 5 ppm | 15 ppm |

Le produit de dégradation étant essentiellement du xylène.

**EXEMPLE 5**

Dans le même appareillage que celui de l'exemple 1 nous traitons pendant 20 h à 370°C, 180 g de dibenzylorthoxylène (non conforme à l'invention) :

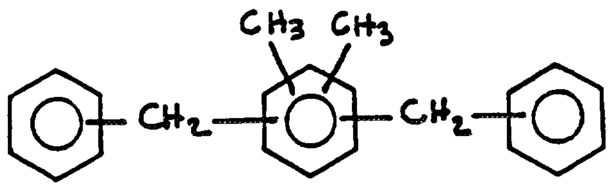

produit obtenu par réaction du chlorure de benzyle avec l'orthoxylène.

L'analyse chromatographique sur le produit après rinçage de l'appareillage comme dans l'exemple 2 conduit aux résultats suivants :

| | Départ | Produit après traitement thermique |
|---|---|---|
| teneur en benzène | < 5 ppm | 840 ppm |

C'est-à-dire une quantité de benzène 56 fois plus grande que celle obtenue avec le composé du type XX02.

**Revendications**

1. Utilisation comme fluide de transfert thermique d'un mélange de produit de formule (A)

(A) 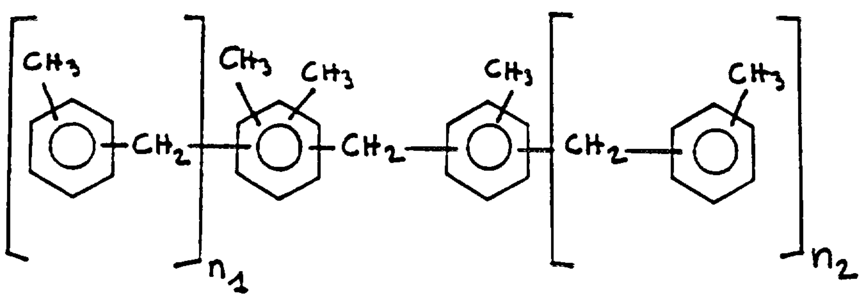

dans laquelle $n_1 + n_2 = 0$ ou 1

et qui contient des produits A tels que $n_1 + n_2 = 0$
et des produits A tels que $n_1 + n_2 = 1$

2. Utilisation selon la revendication 1 caractérisée en ce que la proportion des produits à 2 et 3 noyaux est telle que

le rapport : $\frac{\text{produit à 2 noyaux}}{\text{produit à 3 noyaux}}$ (en poids) est compris entre $\frac{65}{35}$ et $\frac{90}{10}$

3. Utilisation selon la revendication 2 caractérisée en ce que le rapport est compris entre $\frac{82}{18}$ et $\frac{87}{13}$

4. Utilisation selon l'une des revendications 1 à 3 caractérisée en ce que le produit A à 3 noyaux est remplacé en partie ou en totalité par du produit B :

(B) 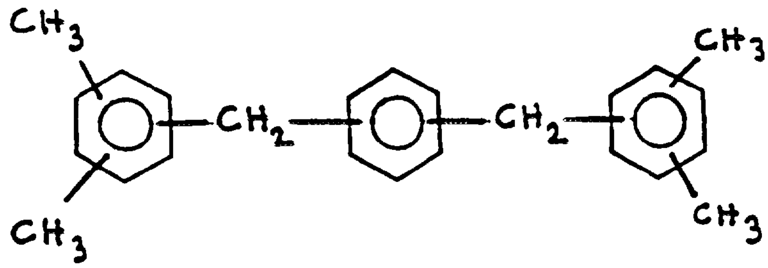

5. Utilisation selon la revendication 4 caractérisée en ce que le fluide de transfert thermique comprend

65 à 90 parties de A tel que $n_1 + n_2 = 0$
26,25 à 7,5 parties de A tel que $n_1 + n_2 = 1$
8,75 à 2,5 parties de B.

**Patentansprüche**

1. Verwendung einer Produktmischung der Formel (A)

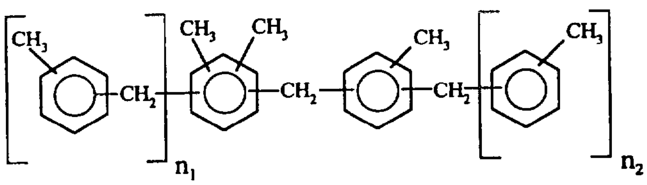 (A)

in der $n_1+n_2=0$ oder 1 ist,
enthaltend Produkte A mit $n_1+n_2=0$ und Produkte A mit $n_1+n_2=1$, als Wärmeübertragungsflüssigkeit.

2. Verwendung nach Anspruch 1, dadurch gekennzeichnet, daß das Verhältnis der Produkte mit 2 und 3 aromatischen Kernen zueinander so ist, daß das Gewichtsverhältnis

$$\frac{\text{Produkt mit 2 aromatischen Kernen}}{\text{Produkt mit 3 aromatischen Kernen}}$$

zwischen 65/35 und 90/10 liegt.

3. Verwendung nach Anspruch 2, dadurch gekennzeichnet, daß das Verhältnis zwischen 82/18 und 87/13 liegt.

4. Verwendung nach einem der Ansprüche 1 bis 3, dadurch gekennzeichnet, daß das Produkt A mit 3 aromatischen Kernen zum Teil oder vollständig durch das Produkt B

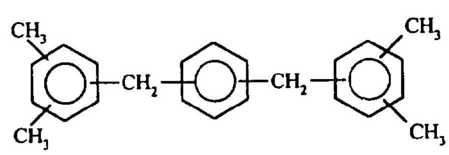 (B)

ersetzt ist.

5. Verwendung nach Anspruch 4, dadurch gekennzeichnet, daß die Wärmeübertragungsflüssigkeit

- 65 bis 90 Teile von A mit $n_1+n_2=0$
- 26,25 bis 7,5 Teile von A mit $n_1+n_2=1$
- 8,75 bis 2,5 Teile von B

enthält.

## Claims

**1.** Use of a mixture of product of formula (A)

(A)

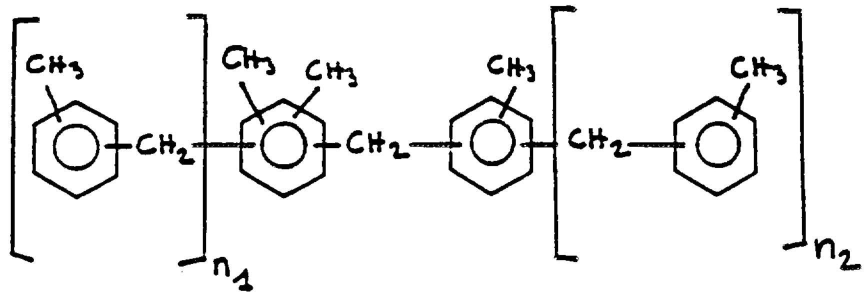

in which $n_1 + n_2 = 0$ or 1,

and which contains products A such that $n_1 + n_2 = 0$
and products A such that $n_1 + n_2 = 1$,

as heat transfer fluid.

**2.** Use according to Claim 1, characterized in that the proportion of bicyclic and tricyclic products is such that the ratio: $\frac{\text{bicyclic product}}{\text{tricyclic product}}$ (by weight) is between $\frac{65}{35}$ and $\frac{90}{10}$.

**3.** Use according to Claim 2, characterized in that the ratio is between $\frac{82}{18}$ and $\frac{87}{13}$.

**4.** Use according to one of Claims 1 to 3, characterized in that the tricyclic product A is partially or completely replaced by product B :

(B)

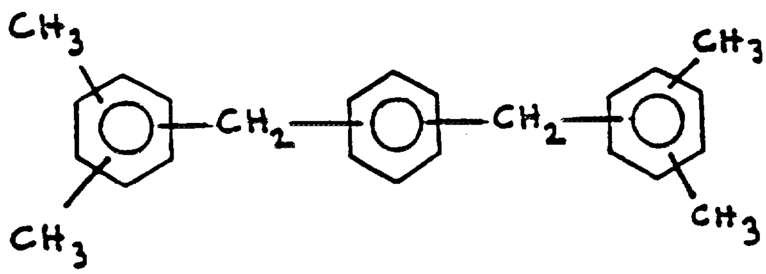

**5.** Use according to Claim 4, characterized in that the heat transfer fluid comprises

65 to 90 parts of A such that $n_1 + n_2 = 0$,
26.25 to 7.5 parts of A such that $n_1 + n_2 = 1$, and
8.75 to 2.5 parts of B.